# EUROPÄISCHE PATENTANMELDUNG

(11) **EP 4 212 008 A1**
(43) Veröffentlichungstag der Anmeldung: **19.07.2023**
(21) Anmeldenummer: 23020014.9
(22) Anmeldetag: 12.01.2023
(51) Int. Cl.: A01G 9/24, A01G 9/16, A01G 31/06, A01C 1/02

(54) **PFLANZENAUFZUCHTSCHRANK UND VERFAHREN ZUM BETREIBEN EINES PFLANZENAUFZUCHTSCHRANKS**

(30) Priorität: 17.01.2022 DE 102022100965
(71) Anmelder: Harting Systems GmbH, 32339 Espelkamp (DE)
(72) Erfinder: Pleye, Christof, 32339 Espelkamp (DE)

(57) **Zusammenfassung**

Die Erfindung betrifft einen Pflanzenaufzuchtschrank (10) mit einem ersten Bereich (13) zur Aufnahme von Pflanzobjekten, wobei der erste Bereich über eine erste Klimaeinheit (21) verfügt. Um bei effizientem Arbeitsablauf den Keimlingen optimale Umgebungsbedingungen zu bieten, wird vorgeschlagen, dass der Pflanzenaufzuchtschrank (10) einen zweiten Bereich (14) zur Aufnahme von Keimlingen aufweist, der getrennt von dem ersten Bereich (13) angeordnet ist, wobei der zweite Bereich (14) über eine zweite Klimaeinheit (22) verfügt, die unabhängig von der ersten Klimaeinheit (21) betreibbar ist. Die Erfindung betrifft auch ein Verfahren zum Betreiben eines Pflanzenaufzuchtschranks (10).

## Beschreibung

Die Erfindung betrifft einen Pflanzenaufzuchtschrank gemäß dem Oberbegriff des Patentanspruchs 1 sowie ein Verfahren zum Betreiben eines Pflanzenaufzuchtschranks nach dem Oberbegriff des Patentanspruchs 9.

In den letzten Jahren sind die Ansprüche von Verbrauchern, insbesondere städtischen Verbrauchern, an die Bereitstellung frischer Pflanzen, wie z. B. Salat und Kräuter, aber auch Zierpflanzen weiter gestiegen. Bisherige Konzepte, bei denen Pflanzen vornehmlich auf Farmen oder Gewächshäusern von Großbetrieben angebaut und geerntet sowie anschließend über teilweise weite Transportwege zum Verbraucher befördert werden, werden verstärkt als nachteilig, da zeitaufwendig und nicht nachhaltig, angesehen. Daher erwächst insbesondere in Ballungsgebieten verstärkt ein Bedürfnis nach frischen Pflanzenprodukten, die vergleichsweise nachhaltig erzeugt worden sind.

Um diesem Bedürfnis gerecht zu werden, wurden Pflanzenaufzuchtschränke entwickelt, in denen Pflanzobjekte in geeignetem Substrat, z. B. auf Pflanzmatten, eingebracht werden und dort, unter ständiger Versorgung mit geeigneter Beleuchtung, Wärme, Feuchtigkeit und Nährstoffen, zu Frischpflanzen, sogenannten "Microgreens", aufgezogen werden. Solche Pflanzenaufzuchtschränke umfassen üblicherweise mehrere Ebenen, auf denen das Substrat mit dem Pflanzenmaterial vorgehalten und zur Aufzucht versorgt wird. Pflanzenaufzuchtschränke werden beispielsweise von größeren Supermärkten und/oder lokalen Nahrungsmittelversorgern betrieben. Die aufgezogenen Pflanzen können nach einer frühen Ernte sehr frisch in Verkaufsbereiche überführt und dort dem Verbraucher zum Kauf angeboten werden.

Keimlinge, also noch nicht ausgekeimtes Saatgut oder Saatgut im Stadium einer beginnenden Keimung, benötigen in den ersten 2 Tagen ein bestimmtes Klima in Form einer gewünschten Temperatur und/oder Luftfeuchtigkeit. Oftmals erfolgt der Keimungsprozess bevorzugt unter Ausschluss von Licht; dies gilt insbesondere für sogenannte Dunkelkeimer.

### Stand der Technik

Es ist bekannt, separate Pflanzenaufzuchtschränke als Inkubatoren zur Durchführung des Keimungsprozesses einzusetzen, wobei in diesen Pflanzenaufzuchtschränken geeignete Umgebungsbedingungen für die Keimlinge bereitgestellt werden. Nach dem Keimungsprozess müssen die gekeimten Pflanzen zur weiteren Aufzucht als Pflanzobjekte in einen anderen Pflanzenaufzuchtschrank eingebracht werden, der zu diesem Zweck entsprechende Umgebungsbedingungen bietet, wodurch zusätzliche - und ggf. fehler- oder unfallanfällige - Arbeitsschritte und -wege notwendig werden.

Außerdem ist es beispielsweise bekannt, die Keimlinge in demselben Pflanzenaufzuchtschrank vorzuziehen, in dem die Aufzucht der Pflanzobjekte erfolgt. Beispielsweise zeigt hierzu die deutsche Offenlegungsschrift DE 24 55 219 A1 einen Pflanzenaufzuchtschrank, in dem eine Schale zum Vorziehen von Keimlingen unter einer Schale mit Pflanzobjekten gelagert wird. Wenn die Pflanzobjekte erntereif sind, wird die Schale mit den vorgezogenen Keimlingen an die Stelle der geernteten Pflanzobjekte bewegt und eine neue Schale mit vorzuziehenden Keimlingen unterhalb dieser Schale in den Pflanzenaufzuchtschrank eingebracht.

Nachteilig an dieser Lösung ist jedoch, dass den Keimlingen keine optimalen Umgebungsbedingungen zur Keimung bereitgestellt werden können.

### Aufgabenstellung

Es ist daher eine Aufgabe der Erfindung, eine Lösung bereitzustellen, die bei effizientem Arbeitsablauf den Keimlingen optimale Umgebungsbedingungen zur Keimung bietet.

### Beschreibung der Erfindung

Diese Aufgabe wird durch einen Pflanzenaufzuchtschrank gemäß Patentanspruch 1 und ein Verfahren zum Betreiben eines Pflanzenaufzuchtschranks gemäß Patentanspruch 9 gelöst. Vorteilhafte Ausgestaltungen und Weiterbildungen sind in den jeweiligen Unteransprüchen angegeben.

Konkret wird die oben genannte Aufgabe durch einen Pflanzenaufzuchtschrank mit einem ersten Bereich zur Aufnahme von Pflanzobjekten gelöst, wobei der erste Bereich über eine erste Klimaeinheit verfügt. Erfindungsgemäß ist vorgesehen, dass der Pflanzenaufzuchtschrank einen zweiten Bereich zur Aufnahme von Keimlingen aufweist, der getrennt von dem ersten Bereich angeordnet ist, wobei der zweite Bereich über eine zweite Klimaeinheit verfügt, die unabhängig von der ersten Klimaeinheit betreibbar ist.

Bei der erfindungsgemäßen Lösung findet somit eine Integration eines Inkubators in demjenigen Pflanzenaufzuchtschrank statt, der auch zur Aufzucht der Pflanzobjekte eingesetzt wird. Dazu wird außer dem ersten Bereich, der zur Aufzucht der Pflanzobjekte dient, ein zweiter Bereich vorgesehen, der zur Aufnahme der Keimlinge eingerichtet ist. Die beiden Bereiche sind zumindest derart voneinander abgetrennt, dass jeder der Bereiche eigene Umgebungsbedingungen, wie insbesondere Beleuchtung, Temperatur und/oder Luftfeuchtigkeit, bieten kann, ohne den jeweils anderen Bereich zu beeinflussen. Dazu kann beispielsweise eine undurchlässige Wand bzw. ein undurchlässiger Boden in dem Pflanzenaufzuchtschrank als Grenze zwischen den beiden Bereichen eingezogen sein. Der zweite Bereich kann beispielsweise in einem unteren Areal des Pflanzenaufzuchtschranks vorgesehen sein. Jeder der beiden Bereiche kann mittels einer eigenen Klimaeinheit eingestellt werden, um den Pflanzobjekten (im ersten Bereich) sowie den Keimlingen (im zweiten Bereich) unabhängig voneinander geeignete Umgebungsbedingungen bereitstellen zu können.

Auf diese Weise kann derselbe Pflanzenaufzuchtschrank sowohl für die Keimphase von Keimlingen als auch für die Aufzucht von Pflanzobjekten genutzt werden. Die nötigen Arbeitsschritte reduzieren sich dabei auf ein Mindestmaß, denn es müssen lediglich die gekeimten Keimlinge aus dem zweiten Bereich als Pflanzobjekte an freie Plätze des ersten Bereiches eingebracht werden.

Konkret kann vorgesehen sein, dass die erste Klimaeinheit zur Bereitstellung einer gewünschten Temperatur und/oder einer gewünschten Luftfeuchtigkeit in dem ersten Bereich und die zweite Klimaeinheit zur Bereitstellung einer gewünschten Temperatur und/oder einer gewünschten Luftfeuchtigkeit in dem zweiten Bereich ausgebildet sind.

Neben einer Beleuchtung und Versorgung mit Wasser und Nährstoffen stellen nämlich Temperatur und Luftfeuchtigkeit wichtige Umgebungsparameter dar, die das Wachstum der Keimlinge und Pflanzobjekte beeinflussen. Die Klimaeinheiten sind zur Beeinflussung mindestens eines dieser Parameter ausgebildet, bevorzugt können sie beide Parameter beeinflussen.

Die Ansteuerung der ersten und der zweiten Klimaeinheit kann manuell erfolgen. Gemäß einer besonders vorteilhaften Ausführungsform des erfindungsgemäßen Pflanzenaufzuchtschranks kann allerdings eine Regeleinrichtung vorgesehen sein, die die erste und die zweite Klimaeinheit unabhängig voneinander ansteuert.

Damit kann eine automatische Ansteuerung der Klimaeinheiten erfolgen, so dass der manuelle Aufwand weiter sinkt. Zur Unterstützung der Regelung können Sensoren im ersten und zweiten Bereich des Pflanzenaufzuchtschranks vorgesehen sein, die zur Messung der aktuellen Temperatur und Luftfeuchtigkeit dienen.

In diesem Zusammenhang kann zudem vorgesehen sein, dass die Regeleinrichtung derart ausgebildet ist, dass sie die zweite Klimaeinheit in Abhängigkeit vom Aufzuchtstatus der Pflanzobjekte im ersten Bereich ansteuert.

Konkret kann hierbei vorgesehen sein, dass die Regeleinrichtung die zweite Klimaeinheit derart ansteuert, dass ein Keimungsprozess der Keimlinge im zweiten Bereich abgeschlossen ist, wenn die Pflanzobjekte im ersten Bereich erntereif sind.

Auf diese Weise kann besonders vorteilhaft das Wachstum der Keimlinge auf dasjenige der Pflanzobjekte abgestimmt werden. Während nämlich die Keimphase der Keimlinge üblicherweise etwa 2 Tage dauert, liegt die Wachstumsphase der Pflanzobjekte bei etwa 6 - 8 Tagen. Die Werte können abhängig von der jeweiligen Art der Keimlinge bzw. Pflanzobjekte variieren. Durch die Berücksichtigung der Dauer der Wachstumsphase kann der Keimungsprozess derart angepasst werden, dass Keimungsprozess und Wachstumsphase gleichzeitig abgeschlossen sind. Dadurch können ein Wechsel der gekeimten Keimlinge als Pflanzobjekte in den ersten Bereich des Pflanzenaufzuchtschranks und die Ernte der Pflanzobjekte zeitgleich durchgeführt werden. Beispielhaft kann vorgesehen sein, dass die Keimbereiche im zweiten Bereich mittels der zweiten Klimaeinheit aktiviert werden, sobald die Pflanzobjekte im ersten Bereich zwei Tage vor der Ernte stehen, so dass zeitgleich Ernte- und Keimphase beendet werden. Somit kann der Austausch gleichzeitig erfolgen und die Pflanzebenen im ersten Bereich sind immer mit vorgezogenem (d. h. gekeimten) Saatgut ausgestattet.

Außerdem kann gemäß einer vorteilhaften Weiterbildung des erfindungsgemäßen Pflanzenaufzuchtschranks vorgesehen sein, dass die Regeleinrichtung dazu eingerichtet ist, die Steuerung der zweiten Klimaeinheit an die Art der Keimlinge anzupassen.

Verschiedene Arten von Keimlingen, z. B. Keimlinge von Kräutern und Salat, benötigen nämlich unterschiedliche Umgebungsbedingungen für einen optimalen Keimungsprozess. Bei der letztgenannten Ausführungsform kann somit die zweite Klimaeinheit in Abhängigkeit von der Art der im zweiten Bereich befindlichen Keimlinge die optimalen Umgebungsparameter zur Unterstützung des Keimungsprozesses einstellen. Die Art der Keimlinge kann beispielsweise manuell vorgegeben werden. Auch kann vorgesehen sein, dass auf einem die Keimlinge tragenden Einschub, der in den zweiten Bereich eingebracht wird, ein automatisch auslesbarer Code angebracht ist, der die Art der Keimlinge angibt und von einem Sensor im Pflanzenaufzuchtschrank erfasst wird. Sofern die Regeleinrichtung die Ansteuerung der zweiten Klimaeinheit auf die Wachstumsphase der Pflanzobjekte im ersten Bereich des Pflanzenaufzuchtschranks anpasst, kann durch die Art der Keimlinge auch die Dauer ihres Keimungsprozesses vorgegeben werden, so dass die zeitliche Abstimmung bei Kenntnis der Art der Keimlinge (und damit der Dauer des Keimungsprozesses) noch besser erfolgen kann.

Eine weitere vorteilhafte Ausführungsform des erfindungsgemäßen Pflanzenaufzuchtschranks sieht vor, dass der zweite Bereich zumindest zwei voneinander getrennte Keimungszellen zur Aufnahme von Keimlingen aufweist, deren Temperatur und/oder Luftfeuchtigkeit mittels der zweiten Klimaeinheit unabhängig voneinander regelbar sind.

Auf diese Weise können unterschiedliche Arten von Keimlingen in den zweiten Bereich eingebracht werden, wodurch der Pflanzenaufzuchtschrank noch flexibler einsetzbar ist. Die getrennte Ansteuerung der Umgebungsparameter in den einzelnen Keimungszellen ermöglicht optimale Bedingungen für den Keimungsprozess der jeweiligen Keimlinge.

In diesem Zusammenhang kann zudem vorgesehen sein, dass jede Keimungszelle mehrere Ebenen zur Aufnahme von Keimlingen umfasst. Hierdurch kann jede Keimungszelle die größtmögliche Anzahl von Keimlingen aufnehmen.

Die oben genannte Aufgabe wird auch durch ein Verfahren zum Betreiben eines Pflanzenaufzuchtschranks gelöst, wobei der Pflanzenaufzuchtschrank einen ersten Bereich zur Aufnahme von Pflanzobjekten aufweist, wobei mittels einer Regeleinrichtung eine erste Klimaeinheit dazu angesteuert wird, eine gewünschte Temperatur und/oder eine gewünschte Luftfeuchtigkeit in dem ersten Bereich bereitzustellen.

Erfindungsgemäß ist vorgesehen, dass mittels der Regeleinrichtung eine zweite Klimaeinheit dazu angesteuert wird, in einem zweiten Bereich des Pflanzenaufzuchtschranks, der zur Aufnahme von Keimlingen ausgebildet ist, unabhängig vom ersten Bereich eine gewünschte Temperatur und/ oder eine gewünschte Luftfeuchtigkeit bereitzustellen.

Eine vorteilhafte Ausführungsform des erfindungsgemäßen Verfahrens sieht schließlich vor, dass mittels der Regeleinrichtung die zweite Klimaeinheit in Abhängigkeit vom Aufzuchtstatus der Pflanzobjekte im ersten Bereich angesteuert wird.

Auf das erfindungsgemäße Verfahren sind alle zuvor bezüglich des erfindungsgemäßen Pflanzenaufzuchtschranks beschriebenen Aspekte und Vorteile anwendbar, insbesondere kann das erfindungsgemäße Verfahren zum Betreiben eines Pflanzenaufzuchtschranks gemäß jeder der voranstehend beschriebenen Ausführungsformen eingesetzt werden.

Insbesondere können durch die Verknüpfung von Informationen bezüglich der Pflanzobjekte und der Keimlinge eine optimale Ausbringung und ein zeitlich aufeinander abgestimmter Ablauf der Keimungs- bzw. Wachstumsphase erfolgen. Hierbei werden bevorzugt Keimphasen von Pflanzen auf die zeitliche Abfolge der Erntezeiten der Pflanzobjekte abgestimmt, so dass der Kontroll- und Arbeitsaufwand der Betreiber minimiert wird.

### Ausführungsbeispiel

Ein Ausführungsbeispiel der Erfindung ist in den Zeichnungen dargestellt und wird im Folgenden näher erläutert. Es zeigen:
- Fig. 1: ein Ausführungsbeispiel eines Pflanzenaufzuchtschranks mit einem ersten und einem zweiten Bereich;
- Fig. 2: den Pflanzenaufzuchtschrank der Figur 1 in einer teilweisen Ansicht von Innen;
- Fig. 3: beispielhafte Keimzellen als Einschübe für den zweiten Bereich;
- Fig. 4: die Keimzellen der Figur 3 in einer teilweisen Innenansicht; und
- Fig. 5: Eine schematische Ansicht von Funktionseinheiten eines Pflanzenaufzuchtschranks.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein.

Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

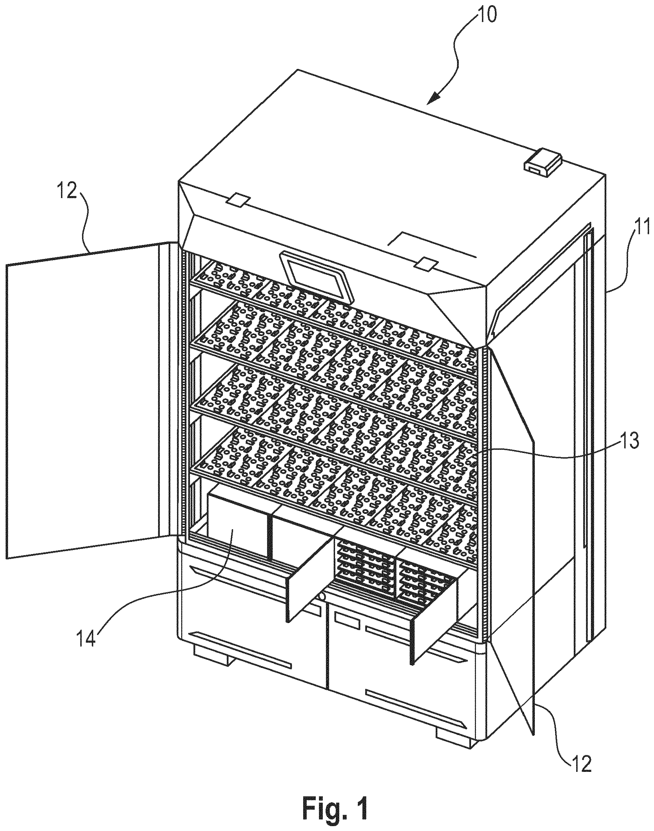

Die Figur 1 zeigt ein Ausführungsbeispiel eines Pflanzenaufzuchtschranks 10 zur Aufzucht von Pflanzobjekten, wie z. B. Kräutern, Salat und Zierpflanzen. Der Pflanzenaufzuchtschrank 10 weist ein Gehäuse 11 auf, das über Türen 12 vorne bedarfsweise geöffnet werden kann. Zur Aufzucht der Pflanzobjekte umfasst der Pflanzenaufzuchtschrank 10 einen ersten Bereich 13. Im Ausführungsbeispiel der Figur 1 weist der erste Bereich vier Etagen auf, auf denen die Pflanzobjekte auf Lochblechen gelagert werden können. Die Pflanzobjekte sind dabei in geeignetem Substrat, z. B. Pflanzmatten, eingebracht. Innerhalb des ersten Bereichs 13 sorgt eine erste Klimaeinheit (nicht in Figur 1 gezeigt) für eine für das Pflanzenwachstum optimale Temperatur und/oder Luftfeuchtigkeit. Außerdem kann eine Beleuchtung vorgesehen sein, die den Pflanzobjekten geeignete Lichtverhältnisse bereitstellt. Nach einer Wachstumsphase, deren Dauer von der Art der Pflanzobjekte abhängt und beispielsweise zwischen 6 - 8 Tagen betragen kann, sind die Pflanzobjekte erntereif und können aus dem Pflanzenaufzuchtschrank 10 entnommen und beispielsweise in Verkaufsregalen eines Supermarktes angeboten werden.

Der Pflanzenaufzuchtschrank 10 weist zusätzlich auch einen zweiten Bereich 14 auf, der speziell für die Anzucht von Keimlingen ausgebildet ist. Keimlinge benötigen üblicherweise andere Umgebungsbedingungen als die bereits vorgezogenen Pflanzobjekte. Beispielsweise keimen viele Pflanzenarten in Dunkelheit (Dunkelkeimer) oder unter geringer Lichteinstrahlung. Zudem sind Temperatur und/oder Luftfeuchtigkeit auf anderen Werten zu halten, um den Keimlingen optimale Bedingungen für den Keimungsprozess zu bieten. Zu diesem Zweck ist der zweite Bereich 14 derart baulich vom ersten Bereich 13 getrennt, dass in ihm unabhängig von den Bedingungen im ersten Bereich 13 andere Umgebungsparameter wie Temperatur und/oder Luftfeuchtigkeit eingestellt werden können. Dazu umfasst der zweite Bereich 14 eine zweite Klimaeinheit (nicht in Figur 1 gezeigt), die unabhängig von der ersten Klimaeinheit im ersten Bereich 13 angesteuert werden kann. Sobald der Keimungsprozess abgeschlossen ist (üblicherweise nach 1 - 3 Tagen), können die vorgezogenen Keimlinge nunmehr als Pflanzobjekte in den ersten Bereich 13 überführt werden. So kann in einem einzigen Pflanzenaufzuchtschrank 10 sowohl die Keimungsphase von Keimlingen als auch die Wachstumsphase von Pflanzobjekten (vorgezogenen Keimlingen) unter optimalen Bedingungen durchgeführt werden.

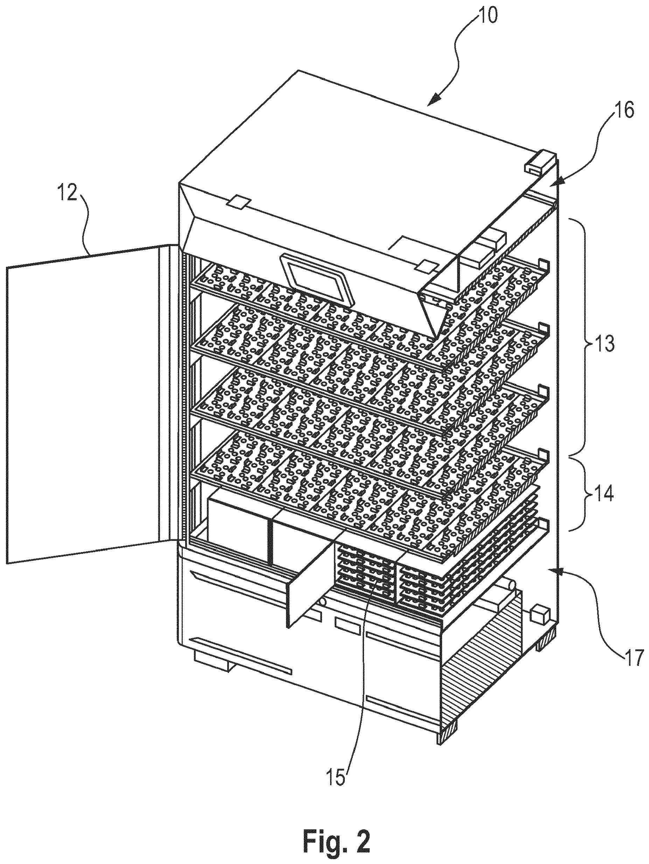

Figur 2 zeigt eine Ansicht des Pflanzenaufzuchtschranks 10 in einer Schnittdarstellung, so dass eine teilweise Innenansicht sichtbar ist. Man erkennt den ersten Bereich 13 für die Pflanzobjekte sowie den zweiten Bereich 14 für die Keimlinge. In den zweiten Bereich 14 sind vier Keimungszellen 15 eingeschoben, in denen Keimlinge vorgezogen werden können.

Der Pflanzenaufzuchtschrank 10 weist zudem einen oberen Technikraum 16 und einen unteren Technikraum 17 auf, die zur Aufnahme von Versorgungseinrichtungen für die Flüssigkeitszu- und -abfuhr dienen, eine Stromversorgung für Beleuchtung und Klimaeinheiten sowie ggf. eine Regeleinrichtung (nicht in Figur 2 dargestellt) zur Ansteuerung der Klimaeinheiten umfassen.

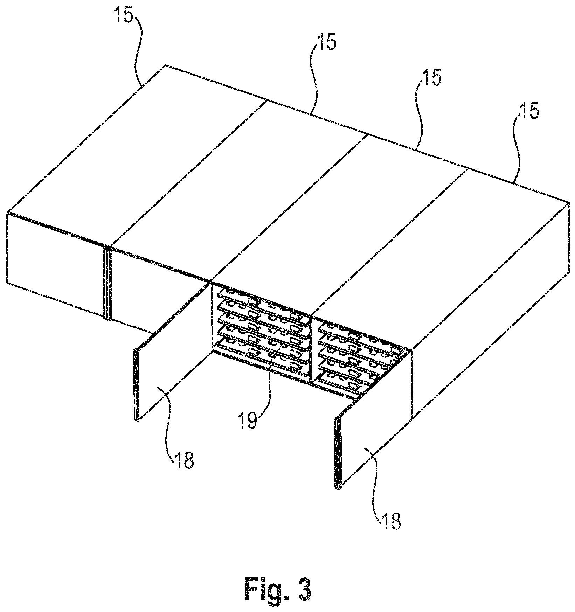

Figur 3 zeigt vier Keimungszellen 15, die in den unteren Bereich 14 des Pflanzenaufzuchtschranks 10 eingeschoben werden können. Die Keimungszellen 15 sind mittels Klappen 18 verschließbar und umfassen optional jeweils mehrere Ebenen 19 zur Aufnahme von Keimlingen. Im Ausführungsbeispiel der Figur 3 sind beispielhaft fünf Ebenen 19 gezeigt, die Anzahl an Ebenen 19 kann im Rahmen der Erfindung jedoch auch davon abweichen.

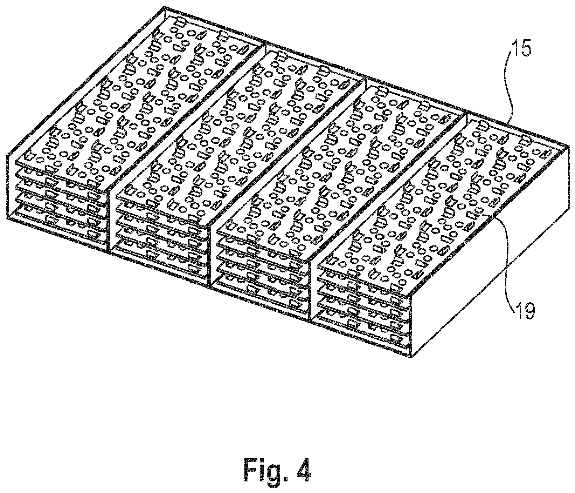

Figur 4 zeigt die Keimungszellen 15 in einer Schnittdarstellung, so dass eine Ansicht auf die oberen Ebenen 19 möglich ist. Diese sind beispielsweise aus Lochblechen gebildet, um eine Abfuhr von Flüssigkeit aus dem Substrat der Keimlinge zu ermöglichen.

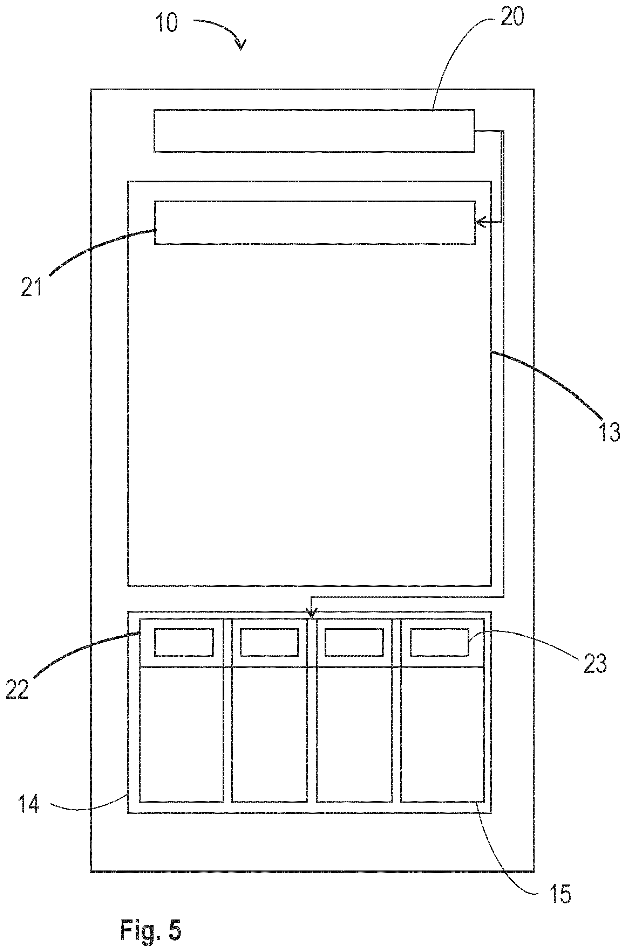

Schließlich zeigt Figur 5 eine beispielhafte schematische Ansicht der Funktionseinheiten eines Pflanzenaufzuchtschranks 10. Man erkennt den ersten Bereich 13 und den zweiten Bereich 14. Zur Bereitstellung optimaler Umgebungsbedingungen umfasst der erste Bereich 13 eine erste Klimaeinheit 21, mit der eine geeignete Temperatur und/oder Luftfeuchtigkeit für die Pflanzobjekte im ersten Bereich 13 eingestellt werden kann. In entsprechender Weise umfasst der zweite Bereich 14 eine zweite Klimaeinheit 22, mit der eine geeignete Temperatur und/oder Luftfeuchtigkeit für die Keimlinge im zweiten Bereich 14 eingestellt werden kann. Dabei kann vorgesehen sein, dass die zweite Klimaeinheit 22 Klima-Subeinheiten 23 aufweist, mit denen für jede Keimungszelle 15 getrennt Temperatur und/oder Luftfeuchtigkeit eingestellt werden können. So können in den einzelnen Keimungszellen 15 jeweils die optimalen Umgebungsbedingungen für unterschiedliche Arten von Pflanzen bereitgestellt werden.

Die Vorgabe von Sollwerten für Temperatur und/oder Luftfeuchtigkeit kann beispielsweise manuell an den jeweiligen Klimaeinheiten 21, 22 vorgenommen werden. Besonders vorteilhaft kann die Ansteuerung der Klimaeinheiten 21, 22 jedoch über eine Regeleinrichtung 20 erfolgen. Diese kann zur Unterstützung der Regelung Sensorwerte aus dem ersten Bereich 13 und dem zweiten Bereich 14 auslesen und Temperatur und/oder Luftfeuchtigkeit entsprechend nachregeln. Hierzu ist die Regeleinrichtung über Signalleitungen mit den Klimaeinheiten 21, 22 verbunden.

Die Regeleinrichtung 20 kann vorzugsweise die erste Klimaeinheit 21 und die zweite Klimaeinheit 22 unabhängig voneinander ansteuern. Dabei kann vorgesehen sein, dass die Regeleinrichtung 20 bei der Ansteuerung der zweiten Klimaeinheit 22 den Aufzuchtstatus der Pflanzobjekte im ersten Bereich 13 berücksichtigt. Hierbei kann die Regelung derart erfolgen, dass mittels der zweiten Klimaeinheit 22 bzw. den einzelnen Klima-Subeinheiten 23 der Keimungsprozess der Keimlinge in den Keimungszellen 15 so gestartet wird, dass das zeitliche Ende der Keimungsphase auf das Ende der Wachstumsphase der Pflanzobjekte im ersten Bereich 13 fällt. Beispielhaft sei angenommen, dass die Pflanzobjekte im ersten Bereich bei den eingestellten Umgebungsparametern eine Wachstumsphase von 6 Tage durchlaufen. In zwei der Keimungszellen 15 seien Keimlinge mit einer Keimungsdauer von 3 Tagen, in zwei weiteren Keimungszellen Keimlinge mit einer Keimungsdauer von 2 Tagen eingebracht. Die Regeleinrichtung 20 belässt die Keimlinge zunächst unter Ruhebedingungen und startet die Keimungsphase durch Aktivieren der jeweiligen Klima-Subeinheiten 23 der zweiten Klimaeinheit 22 genau drei bzw. zwei Tage vor dem Ende der Wachstumsphase der Pflanzobjekte im ersten Bereich 13. Damit kann zeitgleich mit der Ernte der Pflanzobjekte aus dem ersten Bereich 13 ein Wechsel der vorgezogenen Keimlinge aus dem zweiten Bereich 14 in den ersten Bereich 13 erfolgen. Gleichzeitig können neue Keimlinge in den zweiten Bereich 14 eingebracht werden, deren Keimungsphase wiederum passend zur Wachstumsphase der Pflanzobjekte im ersten Bereich 13 gestartet wird.

Die Dauern der Keimungsphase der Keimlinge und der Wachstumsphase der Pflanzobjekte können der Regeleinrichtung beispielsweise manuell vorgegeben werden. Dazu kann der Pflanzenaufzuchtschrank 10 eine Eingabevorrichtung, z. B. einen Touchscreen oder ein Bedienpanel aufweisen, an dem die jeweilige Dauer eingestellt wird.

Alternativ kann vorgesehen sein, dass die Regeleinrichtung 20 dazu programmiert ist, anhand der Art der Keimlinge die Dauer der Keimungsphase zu erkennen. Hierzu kann beispielsweise in einem Speicher der Regeleinrichtung 20 eine Zuordnungstabelle gespeichert sein, in der verschiedenen Arten von Keimlingen die entsprechenden Dauern der Keimungsphasen zugeordnet sind. Die Art der Keimlinge kann der Regeleinrichtung 20 manuell beim Einbringen der Keimlinge in den zweiten Bereich 14 vorgegeben werden. Alternativ kann die Keimungszelle 15 auch einen maschinell auslesbaren Code aufweisen, der die Art der Keimlinge angibt. Beim Einbringen in den zweiten Bereich 14 wird der Code ausgelesen und an die Regeleinrichtung 20 übertragen.

### Bezugszeichenliste

- 10: Pflanzenaufzuchtschrank
- 11: Gehäuse
- 12: Tür
- 13: erster Bereich
- 14: zweiter Bereich
- 15: Keimungszelle
- 16: oberer Technikraum
- 17: unterer Technikraum
- 18: Klappe
- 19: Ebene
- 20: Regeleinrichtung
- 21: erste Klimaeinheit
- 22: zweite Klimaeinheit
- 23: Klima-Subeinheit

## Patentansprüche

1. Pflanzenaufzuchtschrank (10) mit einem ersten Bereich (13) zur Aufnahme von Pflanzobjekten, wobei der erste Bereich über eine erste Klimaeinheit (21) verfügt,
**dadurch gekennzeichnet, dass**
der Pflanzenaufzuchtschrank (10) einen zweiten Bereich (14) zur Aufnahme von Keimlingen aufweist, der getrennt von dem ersten Bereich (13) angeordnet ist, wobei der zweite Bereich (14) über eine zweite Klimaeinheit (22) verfügt, die unabhängig von der ersten Klimaeinheit (21) betreibbar ist.

2. Pflanzenaufzuchtschrank (10) nach Anspruch 1,
**dadurch gekennzeichnet, dass**
die erste Klimaeinheit (21) zur Bereitstellung einer gewünschten Temperatur und/oder einer gewünschten Luftfeuchtigkeit in dem ersten Bereich (13) und die zweite Klimaeinheit (22) zur Bereitstellung einer gewünschten Temperatur und/oder einer gewünschten Luftfeuchtigkeit in dem zweiten Bereich (14) ausgebildet sind.

3. Pflanzenaufzuchtschrank (10) nach Anspruch 1 oder 2,
**dadurch gekennzeichnet, dass**
eine Regeleinrichtung (20) vorgesehen ist, die die erste Klimaeinheit (21) und die zweite Klimaeinheit (22) unabhängig voneinander ansteuert.

4. Pflanzenaufzuchtschrank (10) nach Anspruch 3,
**dadurch gekennzeichnet, dass**
die Regeleinrichtung (20) derart ausgebildet ist, dass sie die zweite Klimaeinheit (22) in Abhängigkeit vom Aufzuchtstatus der Pflanzobjekte im ersten Bereich (13) ansteuert.

5. Pflanzenaufzuchtschrank (10) nach Anspruch 4,
**dadurch gekennzeichnet, dass**
die Regeleinrichtung (20) die zweite Klimaeinheit (22) derart ansteuert, dass ein Keimungsprozess der Keimlinge im zweiten Bereich (14) abgeschlossen ist, wenn die Pflanzobjekte im ersten Bereich (13) erntereif sind.

6. Pflanzenaufzuchtschrank (10) nach einem der Ansprüche 3 - 5,
**dadurch gekennzeichnet, dass**
die Regeleinrichtung (20) dazu eingerichtet ist, die Steuerung der zweiten Klimaeinheit (22) an die Art der Keimlinge anzupassen.

7. Pflanzenaufzuchtschrank (10) nach einem der vorangehenden Ansprüche,
**dadurch gekennzeichnet, dass**
der zweite Bereich (14) zumindest zwei voneinander getrennte Keimungszellen (15) zur Aufnahme von Keimlingen aufweist, deren Temperatur und/oder Luftfeuchtigkeit mittels der zweiten Klimaeinheit (22) unabhängig voneinander regelbar sind.

8. Pflanzenaufzuchtschrank (10) nach Anspruch 6,
**dadurch gekennzeichnet, dass**
jede Keimungszelle (15) mehrere Ebenen (19) zur Aufnahme von Keimlingen umfasst.

9. Verfahren zum Betreiben eines Pflanzenaufzuchtschranks (10), wobei der Pflanzenaufzuchtschrank (10) einen ersten Bereich (13) zur Aufnahme von Pflanzobjekten aufweist, wobei mittels einer Regeleinrichtung (20) eine erste Klimaeinheit (21) dazu angesteuert wird, eine gewünschte Temperatur und/oder eine gewünschte Luftfeuchtigkeit in dem ersten Bereich (13) bereitzustellen,
**dadurch gekennzeichnet, dass**
mittels der Regeleinrichtung (20) eine zweite Klimaeinheit (22) dazu angesteuert wird, in einem zweiten Bereich (14) des Pflanzenaufzuchtschranks, der zur Aufnahme von Keimlingen ausgebildet ist, unabhängig vom ersten Bereich (13) eine gewünschte Temperatur und/oder eine gewünschte Luftfeuchtigkeit bereitzustellen.

10. Verfahren zum Betreiben eines Pflanzenaufzuchtschranks (10),
**dadurch gekennzeichnet, dass**
mittels der Regeleinrichtung (20) die zweite Klimaeinheit (22) in Abhängigkeit vom Aufzuchtstatus der Pflanzobjekte im ersten Bereich (13) angesteuert wird.
